# EUROPEAN PATENT APPLICATION

(11) **EP 3 989 616 A1**
(43) Date of publication of application: **27.04.2022**
(21) Application number: 19934273.4
(22) Date of filing: 18.06.2019
(51) Int. Cl.: H04W 8/22, H04W 16/26, H04W 92/20, H04W 88/08

(54) **WIRELESS COMMUNICATION NODE AND WIRELESS COMMUNICATION METHOD**

(71) Applicant: NTT DOCOMO, INC., Chiyoda-Ku Tokyo 100-6150 (JP)
(72) Inventor: KURITA, Daisuke, Tokyo 100-6150 (JP); HARADA, Hiroki, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2019/024174
(87) International publication number: WO 2020/255273

(57) **Abstract**

A radio communication node (100B) includes an upper node connecting unit (170), a lower node connecting unit (180), and a control unit (190) that notifies an upper node or a network whether or not the upper node connecting unit (170) and the lower node connecting unit (180) are compatible with at least one of a space division multiplexing and a frequency division multiplexing.

## Description

### TECHNICAL FIELD

The present invention relates to a radio communication node that is capable of configuration a radio access and a radio backhaul.

### BACKGROUND ART

3rd Generation Partnership Project (3GPP) specifies Long Term Evolution (LTE), and with the aim of further speeding, specifies LTE-Advanced (hereinbelow, the LTE includes the LTE-Advanced), further, a succeeding system of the LTE called 5G New Radio (NR) or Next Generation (NG) and the like is being specified.

For example, in a radio access network (RAN) of the NR, an Integrated Access and a Backhaul (IAB) in which a radio access to a user equipment (UE) and a radio backhaul set between radio communication nodes such as radio base stations (gNBs) are integrated is being studied (See Non-Patent Document 1) .

In the IAB, the IAB node includes Mobile Termination (MT) function for connecting to a parent node, and a Distributed Unit (DU) function for connecting to a child node or the UE.

In Release 16 of 3GPP, half-duplex communication and time division multiplexing (MTD) are prerequisite to the radio access and the radio backhaul. Radio resources that are available by the radio access and the radio backhaul, from the DU's perspective, a downlink (DL), an uplink (UL), and a Flexible time-resource (D/U/F) are classified as one of the types of hard, soft, and Not Available (H/S/NA).

Specifically, the "hard" radio resource is a radio resource that is always available for a DU child link via which a corresponding time resource is connected to a child node or the UE, and the "soft" radio resource is a radio resource in which the availability thereof for the DU child link of the corresponding time resource is explicitly or implicitly controlled by the parent node.

### PRIOR ART DOCUMENT

### NON-PATENT DOCUMENT

Non-Patent Document 1: 3GPP TR 38.874 V16.0.0, 3rd Generation Partnership Project; Technical Specification Group Radio Access Network; NR; Study on Integrated Access and Backhaul; (Release 16), 3GPP, December 2018

### SUMMARY OF THE INVENTION

As mentioned above, in Release 16 of 3GPP, the TDM is a prerequisite, but a simultaneous operation of the DU and the MT of an IAB node has not been taken into consideration. Hereafter, from Release 17 onward, application of space division multiplexing (SDM) and frequency division multiplexing (FDM) has been studied.

At the time of specifying from Release 17 onward, it is necessary to take into consideration realization of the simultaneous operation of the MT and the DU while adhering to an IAB function of Release 16.

Therefore, the present invention has been made in view of the above circumstances, and one object of the present invention is to provide a radio communication node and a radio communication method suitable for the simultaneous operation of the MT and the DU while adhering to a predetermined IAB function.

According to one aspect of the present disclosure a radio communication node (radio communication node 100B) includes an upper node connecting unit (upper node connecting unit 140) that is used for connecting with an upper node; a lower node connecting unit (lower node connecting unit 180) that is used for connecting with a lower node; and a control unit (control unit 190) that notifies to the upper node or a network whether or not the upper node connecting unit and the lower node connecting unit are compatible with at least one of a space division multiplexing and a frequency division multiplexing.

According to another aspect of the present disclosure a radio communication method includes connecting to an upper node by using an upper node connecting unit; connecting to a lower node by using a lower node connecting unit; notifying the upper node or a network whether or not the upper node connecting unit and the lower node connecting unit are compatible with at least one of a space division multiplexing and a frequency division multiplexing.

### BRIEF DESCRIPTION OF DRAWINGS

FIG. 1 is an overall structural diagram of a radio communication system 10.
FIG. 2 shows a basic configuration example of IAB.
FIG. 3 is a functional block diagram of radio communication nodes 100A, 100B, and 100C.
FIG. 4 shows a functional block diagram of communication node 100B.
FIG. 5 is a diagram showing a schematic communication sequence in a case of performing radio communication using SDM/FDM, in architecture of IAB.
FIG. 6 is a diagram showing an operation of a DU and an MT in proposal 0 (option 1).
FIG. 7 is a diagram showing an operation of the DU in proposal 0 (option 2).
FIG. 8 is a diagram showing an operation of the DU in proposal 0 (option 3).
FIG. 9 is a diagram showing an operation of the DU and the MT of an IAB node in an H-D/H-U resource in a case in which TDM is used.
FIG. 10 is a diagram showing a configuration example of UE capability information in proposal 1.
FIG. 11 is a diagram showing a presentation example (part 1) of whether or not there is a support for each resource type in proposal 2.
FIG. 12 is a diagram showing presentation example (part 2) of whether or not there is a support for each resource type in proposal 2.
FIG. 13 is a diagram showing a presentation example (part 3) of whether or not there is a support for each resource type in proposal 2.
FIG. 14 is a diagram showing an operation of the MT in proposal 3 (option 1).
FIG. 15 is a diagram showing an operation of the MT in proposal 3 (option 2).
FIG. 16 is a diagram showing an example of hardware configuration of the CU 50 and radio communication nodes 100A, 100B, and 100C.

### MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

### (1) Overall Structural Configuration of Radio Communication System

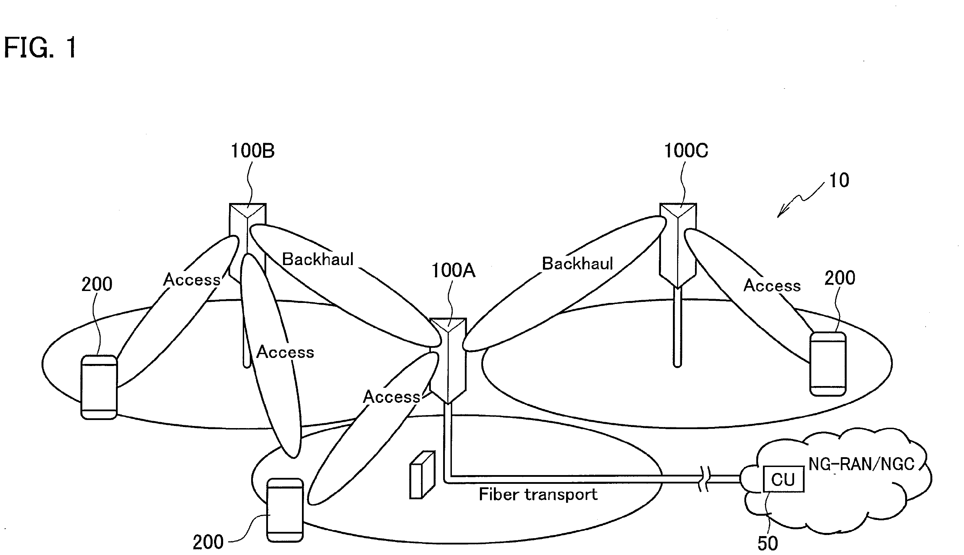

FIG. 1 is an overall structural diagram of a radio communication system 10 according to the present embodiment. The radio communication system 10 is a radio communication system using 5G New Radio (NR), and is constituted by a plurality of radio communication nodes and a user equipment.

Specifically, the radio communication system 10 includes radio communication nodes 100A, 100B, and 100C, and a user equipment 200 (hereinafter, "UE 200").

The radio communication nodes 100A, 100B, and 100C are capable of configuring a radio access with the UE 200 and a radio backhaul between the radio communication nodes. Specifically, a backhaul using a radio link (transmission path) is configured between the radio communication node 100A and the radio communication node 100B, and between the radio communication node 100A and the radio communication node 100C.

Accordingly, a configuration in which the radio access to the UE 200 and the radio backhaul between the radio communication nodes are integrated is called Integrated Access and Backhaul (IAB).

In the IAB, the existing functions and interfaces defined for the radio access are reused. Particularly, the Mobile-Termination (MT), gNB-DU (Distributed Unit), gNB-CU (Central Unit), User Plane Function (UPF), Access and Mobility Management Function (AMF), and a Session Management Function (SMF), along with their corresponding interfaces, for example, NR Uu (between MT and gNB / DU), F1, NG, X2, and N4 are used as a baseline.

The radio communication node 100A is connected to a core network (Next Generation Core (NGC) or 5GC) and a radio access network (NG-RAN) of the NR, via a wired transmission path such as a fiber transport. A central unit 50 (hereinafter, CU 50 which is a communication node is included in the NG-RAN/NGC. The NG-RAN and the NCG may be inclusively expressed simply as 'network' .

Note that, the CU 50 may be constituted by one the abovementioned UPF, AMF, and SMF, or a combination thereof. Alternatively, the CU 50 may be a gNB-CU as explained above.

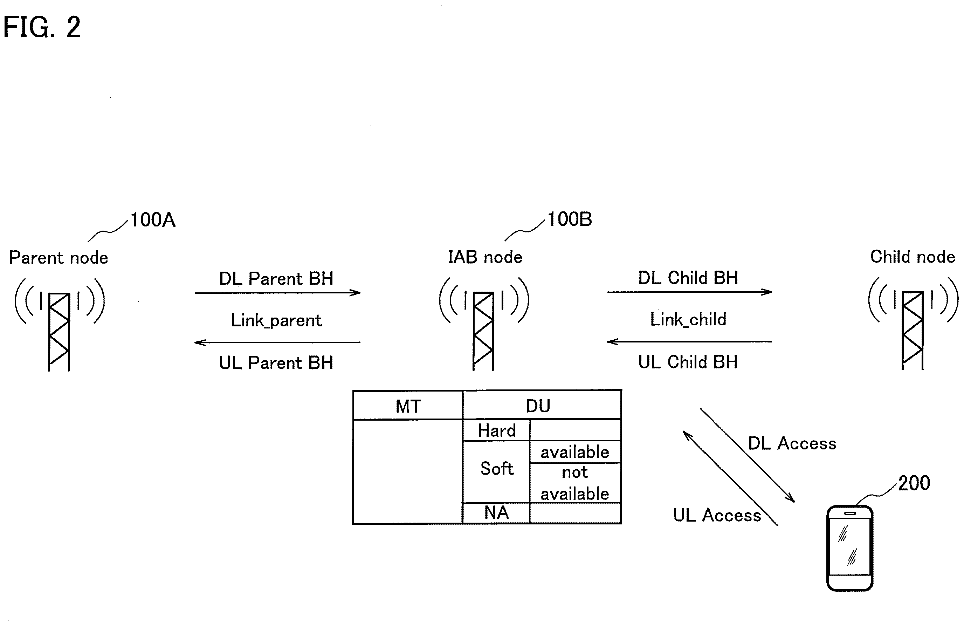

FIG. 2 is a diagram showing a basic configuration example of the IAB. As shown in FIG. 2, in the present embodiment, the radio communication node 100A constitutes a parent node in the IAB, and the radio communication node 100B (and the radio communication node 100C) constitutes (constitute) an IAB node in the IAB. The parent node may be referred to as an IAB donor.

A child node in the IAB, is constituted by another radio communication node that is not shown in FIG. 1. Alternatively, the UE 200 may constitute a child node.

A radio link is configured between the parent node and the IAB node. Specifically, a radio link called as Link_parent is configured.

A radio link is configured between the IAB node and the child node. Specifically, a radio link called as Link_child is configured.

Such radio link configured between the radio communication nodes is called as a radio backhaul link. Link_parent is constituted by a DL Parent BH in a downward direction and a UL Parent BH in an upward direction. Link_child is constituted by the DL Child BH in the downward direction and the UL Child BH in the upward direction.

Note that, the radio link configured between the UE 200 and the IAB node or the parent node is called as a radio access link. Specifically, the radio link is constituted by a DL Access in the downward direction and a UL access in the upward direction.

The IAB node has a Mobile Termination (MT) which is a function for connecting to the parent node, and a Distribution Unit (DU) which is a function for connecting to the child node (or the UE 200). Note that, although it is omitted in FIG. 2, the parent node and the child node also have the MT and the DU.

Radio resources that the DU uses, from the DU's perspective, a downlink (DL), an uplink (UL), and a Flexible time-resource (D/U/F) are classified as one of the types of hard, soft, or Not Available (H/S/NA) . Moreover, even in a soft (S), the radio resources are stipulated as available and not available.

The configuration example of the IAB shown in FIG. 2 uses CU / DU division; however, the IAB configuration need not necessarily be limited to such a configuration. For example, in the radio backhaul, the IAB can be constituted by a tunneling that uses GPRS Tunneling Protocol (GTP)-U / User Datagram Protocol (UDP) / Internet Protocol (IP).

The main advantage of such IAB configuration is that NR cells can be flexibly and densely arranged without increasing the density of the transport network. The IAB can be applied to various scenarios, such as arrangement of small cell outdoors, and support for indoor and mobile relays (for example, in buses and trains).

Moreover, as shown in FIGS. 1 and 2, the IAB can support deployment in a standalone (SA) mode of NR only or a non-standalone (NSA) mode that includes other RATs (LTE and the like).

In the present embodiment, the radio access and the radio backhaul operate on the prerequisite of half-duplex. However, it not necessarily restricted to half-duplex, and it may be full-duplex provided that the requirement is satisfied.

Moreover, as a multiplexing system, time division multiplexing (TDM), space division multiplexing (SDM), and frequency division multiplexing (FDM) are available.

The IAB node, in a case of operating by the half duplex, the DL Parent BH becomes a receiving (RX) side, the UL Parent BH becomes a transmitting (TX) side, the DL Child BH becomes the transmitting (TX) side, and the UL Child BH becomes the receiving (RX) side. In a case of Time Division Duplex (TDD), for a configuration pattern of DL/UL in the IAB node, without being restricted to DL-F-U, only for the radio backhaul, a configuration pattern of UL-F-DL and the like may be applied.

In the present embodiment, by using SDM/FDM, a synchronization operation of the DU and the MT of the IAB is realized.

### (2) Functional Block Configuration of Radio Communication System.

Next, a functional block configuration of the radio communication node 100A and the radio communication node 100B constituting the radio communication system 10 will be explained below.

### (2.1) Radio Communication Node 100A

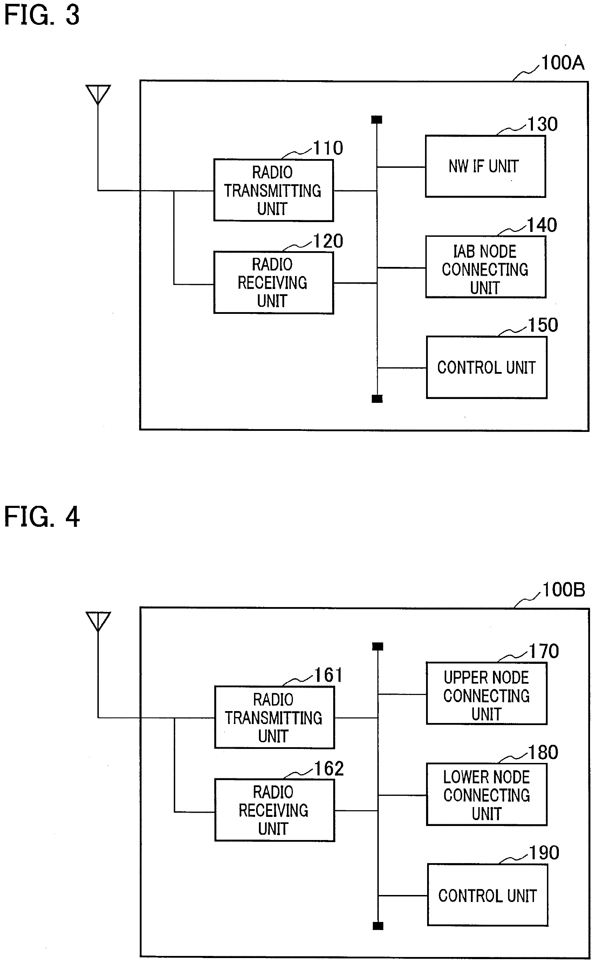

FIG. 3 is a functional block diagram of the radio communication node 100A constituting a parent node. As shown in FIG. 3, the radio communication node 100A includes a radio transmitting unit 110, a radio receiving unit 120, an NW IF unit 130, an IAB node connecting unit 140, and a control unit 150.

The radio transmitting unit 110 transmits a radio signal according to specifications of 5G. Moreover, the radio receiving unit 120 transmits a radio signal according to the specifications of 5G. In the present embodiment, the radio transmitting unit 110 and the radio receiving unit 120 perform radio communication with the radio communication node 100B constituting the IAB node.

In the present embodiment, the radio communication node 100A has functions of the MT and the DU, and the radio transmitting unit 110 and the radio receiving unit 120 also transmit and receive radio signals corresponding to the MT / DU.

The NF IF unit 130 provides a communication interface that realizes connection with an NGC side and the like. For instance, the NW IF unit 130 may include interfaces such as X2, Xn, N2, N3 and the like.

The IAB node connecting unit 140 provides an interface and the like, that realizes connection with the IAB node (or may be a child node including the UE). Specifically, the IAB node connecting unit 140 provides the function of the Distributed Unit (DU). That is, the IAB node connecting unit 140 is used for connection with the IAB node (or the child node) .

Note that, the IAB node may be expressed as an RAN node that supports the radio access to the UE 200, and backhauls access traffic by radio. Moreover, the parent node, that is, an IB donor, may be expressed as an interface of UE to the core network, and an RAN node that provides a radio backhaul function to the IAB node.

The control unit 150 performs control of each functional block that constitutes the radio communication node 100A. Particularly, in the present embodiment, the control unit 150 acquires a configuration of a radio resource for the child node in the IAB node.

Specifically, the control unit 150 is capable of acquiring configuration information of the radio resource from the IAB node. Alternatively, the control unit 150 is capable of acquiring the configuration information of the radio resource from the network, specifically, from the CU 50.

The control unit 150, on the basis of the configuration information of the radio resource, performs allocation and the like of a radio resource for the parent node and the IAB node.

### (2.2) Radio Communication Node 100B

FIG. 4 is a functional block diagram of the radio communication node 100B constituting the IAB node. As shown in FIG. 4, the radio communication node 100B includes a radio transmitting unit 161, a radio receiving unit 162, an upper node connecting unit 170, a lower node connecting unit 180, and a control unit 190. In such manner, the radio communication node 100B includes a functional block that is similar to the abovementioned radio communication node 100A (parent node), but differs at a point of including the upper node connecting unit 170 and the lower node correcting unit 180, and a function of the control unit 190.

The radio transmitting unit 161 transmits a radio signal according to the specifications of 5G. Moreover, the radio receiving unit 162 transmits a radio signal according to the specifications of 5G. In the present embodiment, the radio transmitting unit 161 and the radio receiving unit 162 perform radio communication with the radio communication node 100Athat constitutes the parent node, and radio communication with the child (including a case of UE 200).

The upper node connecting unit 170 provides an interface and the like that performs connection with a node upper than the IAB node. Note that, the upper node signifies a radio communication node that is positioned on a network side, specifically, a core-network side (may be called as an upstream side or an upper side), of the IAB node.

Specifically, the upper node connecting unit 170 provides the function of Mobile Termination (MT). That is, the upper node connecting unit 170, in the present embodiment, is used for connection with the parent that constitutes the upper node.

The lower node connecting unit 180 provides an interface that realizes connection with a node lower than the IAB node. The lower node signifies a radio communication node that is positioned on an end-user side (may be called as a downstream side or a lower side) of the IAB node.

Specifically, the lower node connecting unit 180 provides the function of the Distributed Unit (DU). That is, the lower node connecting unit 180, in the present embodiment, is used for connection with the child node (may be (UE 200) that constitutes the lower node.

The control unit 190 performs control of each functional block constituting the radio communication node 100B. Particularly, in the present embodiment, the control unit 190 notifies to the upper node or the network, whether or not the upper node connecting unit 170 and the lower node connecting unit 180 are compatible with at least one of the space division multiplexing (SDM) and the frequency division multiplexing (FDM) . That is, the IAB node may be compatible with any of the SDM or the FDM, or may be compatible with both, and both the SDM and the FDM may be performed simultaneously.

Specifically, the control unit 190 is capable of notifying to the parent node (radio communication node 100A) or the CU 50, whether or not the upper node connecting unit 170 and the lower node connecting unit 180 can perform radio communication according to the SDM.

Similarly, the control unit 190 is capable of notifying to the parent node (radio communication node 100A) or the CU 50, whether or not the upper node connecting unit 170 and the lower node connecting unit 180 can perform radio communication according to the FDM.

A specific example of the notification will be explained later, and the notification can be realized by signaling of a radio resource control layer (RRC) for example. However, the notification may be realized by signaling in which a MAC Control Element (CE) is used.

Moreover, the control unit 190 is also capable of acquiring whether or not it is SDM or FDM in a radio resource for the lower node. Specifically, the control unit 190 acquires from the network, specifically, for the CU 50, whether or not to perform radio communication according to the SDM or the FDM in which a radio resource allocated for the child node is used. Note that, it is possible realize even such information indicating whether or not it is SDM or FDM in a radio resource by signaling in which the RRC or the MAC-CE has been used.

Furthermore, the control unit 190 is capable of notifying, as to by which of the transmission or the reception in the IAB node, the radio source for lower node is used. Specifically, the control unit 190 notifies, in which of the transmission and the reception in the IAB node, the radio resource for the child node is used. It is possible to realize even such notification by signaling in which the RRC or the MAC-CE is used.

### (3) Operation of radio communication system

Next, an operation of the radio communication system will be explained below. Specifically, a simultaneous operation of the DU and the MT of the IAB node will be explained below. More specifically, an efficient coordination between the parent node and the IAB node of a radio resource used, while realizing the simultaneous operation of the DU and the MT of the IAB node by using the SDM or the FDM will be explained below.

### (3.1) Outline of Operation

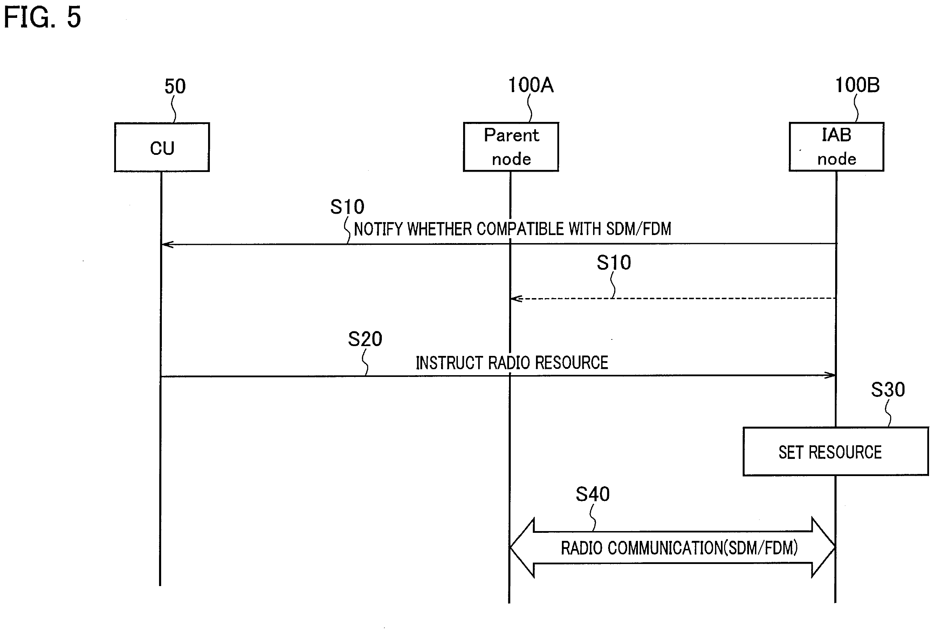

FIG. 5 shows a schematic communication sequence in a case of performing radio communication using SDM/FDM, in architecture of IAB.

As shown in FIG. 5, the IAB node (radio communication node 100B) transmits to the network, specifically to the CU 50, a notification corresponding to SDM/FDM indicating whether or not a local node is compatible with the SDM / FDM (Step S10).

Note that, the IAB node may transmit the notification corresponding to SDM/FDM to the parent node (radio communication node 100A) (refer to dotted lines in the diagram) .

The CU 50, on the basis of content of the notification corresponding to SDM/FDM received from the IAB node and an allocation status of the radio resource with respect to other radio communication nodes constituting the IAB, instructs the IAB node a radio resource which the DU of the IAB node can use (Step S20).

The IAB node, on the basis of the instruction content of the radio resource received, configures the radio resource that the DU and the MT of the IAB node use (Step S30) . The configuration of the resource also includes the configuration of multiplexing system (SDM/FDM).

The IAB node, on the basis of the configuration of the radio resource, performs radio communication according to SDM/FDM with the child node (including the UE) not shown in FIG. 5 and the parent node (Step S40).

### (3.2) Detailed Operation

Next, details of the abovementioned operation will be explained below. First, in Release 16 of 3GPP, the study has been carried forward on the premise that mainly the TDM is used for the MT and the DU. Therefore, the simultaneous operation with the MT and the DU has not been taken into consideration in specifications study, and the following operation has been agreed upon.
- the CU configures a downlink (DL), an uplink (UL), and a Flexible time-resource (D/U/F) for the MT and the DU of the IAB node
- the CU configures a hard, a soft, or Not available (H/S/NA) for the resource of the DU of the IAB node

Consequently, the DU resource of the IAB node is configured to any one of DL-H, DL-S, UL-H, UL-S, F-H, F-S, and NA.
- the parent node instructs the Availability to a soft DU resource of the IAB node
- the parent node has a function of keeping track of all or some of the configurations (H/S/NA/D/U/F) of the DU resource of the IAB node

In the present embodiment, the simultaneous operation of the MT and the DU of the IAB node in which the SDM/FDM has been used is realized, while adhering to such specifications of Release 16.

In the present embodiment, the following Assumptions 0 to 4 are configured, and proposals 0 to 5 corresponding to the Assumptions are indicated. Respective assumptions and proposals 0 to 5 have the following relationship.
- assumption 0: in a case in which the DU resource is NA (Not Available)
- (proposal 0): in a case in which a transmission - reception (Tx / Rx) direction of the DU and the MT coincide, and the DU, even in a case in which NA is instructed, enables data transmission and reception (that is, performs data transmission and reception)
- assumption 1: in a case in which the DU resource is DL-H and UL-H
- (proposal 1) : to report to CU, whether or not corresponds to SDM/FDM of the IAB node (may be notified as a capability of the IAB node)
- (proposal 2): not only whether or not corresponds to SDM/FDM of the IAB node, but similar to Release 16, the CU instructs D/U/F and H/S/NA to the DU
- (proposal 3): in a case in which the direction of transmission - reception (Tx/Rx) with the DU and the MT coincides or does not coincide, by matching the Tx/Rx direction of the MT to that of the DU, transmission and reception of data by the MT becomes possible
- assumption 2: in a case in which the DU resource is DL-S and UL-S

Since the parent node notifies IA/INA to the DL-S and the UL-S, it is in conformance with 'assumption 1' in a case of IA, and in conformance with 'assumption 0' in a case of INA.

Note that, 'IA' signifies that the DU resource is explicitly or implicitly indicated to be enabled. Moreover, 'INA' signifies that the DU resource is explicitly or implicitly indicated to be disabled.
- assumption 3: in a case in which the DU resource is F-H
- (proposal 4) : in a case in which the DU resource is F-H, the parent node has a function of identifying whether the IAB node instructed dynamically is used by either transmission or reception
- (proposal 5): in a case in which the configuration pattern in the DU of the IAB node is DL/UL, it is in conformance with 'proposition 3', and in a case of F, transmission or reception by the MT is disabled.
- Assumption 4: in a case in which the DU resource is F-S

The parent node or the IAB node configures D/U/F for F, and the parent node notifies IA/INA to S. Consequently, in a case of DL-IA or UL-IA, it is in conformance with 'assumption 1', in a case of F-IA, it is in conformance with 'assumption 3', and in a case of DL-INA, UL-INA, and F-INA, it is in conformance with 'assumption 0'.

The respective conditions and proposals will be descried below further specifically.

### (3.2.1) Regarding Assumptions

In SDM/FDM in the IAB, a mechanism of quasi-static configuration of the DU resource by the TDM in the IAB is reused.

As explained above, when the type (HD/HU/HF/SD/SU/SF/NA) of the DU resource is taken into consideration, it is possible to configure the following assumptions for SDM/FDM.
- assumption 0: study of SDM/FDM in a DU NA resource
- assumption 1: support SDM/FDM in DU hard-DL and hard-UL
- assumption 2: support SDM/FDM in DU soft-DL and soft-UL
- assumption 3: support SDM/FDM in DU hard-F
- assumption 4: support SDM/FDM in DU soft-F

Moreover, SDM/FDM may be supported in combinations of assumptions 0 to 4.

### (3.2.2) Proposal 0

First, assumption 0 will be analyzed. In a case in which, in the DU NA resource, that is, in TDM, the radio resource has been configured as disabled (NA), the DU does not assume that the radio resource can be used.

In the SDM, as a direct method, for the DU NA, the mechanism of the TDM is reused. That is, in a case in which, the radio resource has been configured to be disabled, the DU does not assume that the radio resource can be used. Moreover, supporting an SDM/FDM operation by using the DU NA resource can be cited as an alternative proposal.

In proposal 0, there are following three options for an operation of the IAB node in the DU NA resource.
- option 1: in a case of a radio resource configured as the DU NA resource, the SDM is not supported by this radio resource (this is let to be default) . That is, even if the SDM has been configured, the DU does not assume that the radio resource can be used.

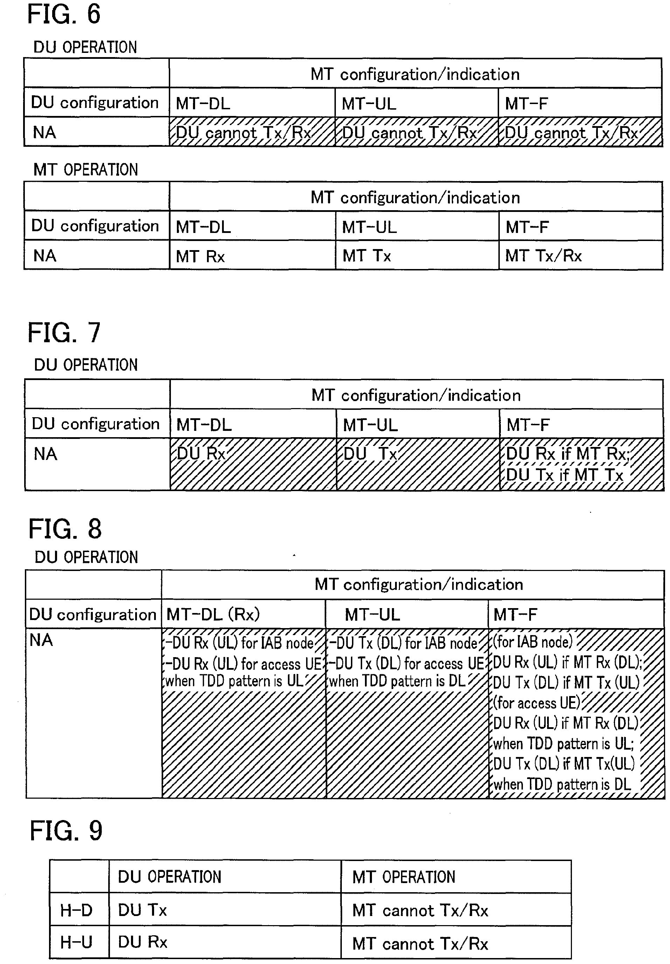

FIG. 6 shows an operation of the DU and the MT in proposal 0 (option 1). Specifically, FIG. 6 shows an operation of the DU and the MT in accordance with the configuration condition of the radio resource in the DU and the MT of the IAB node. A hatched portion indicates a portion related to the proposal / option in particular (the same applied hereinafter) . The transmission (Tx) and the reception (Rx) in the diagram are with reference to the IAB node.
- option 2: To support the SDM in the DU NA resource. The DU, in the direction same as the MT, is capable of Tx and the Rx.

FIG. 7 shows an operation of the DU in proposal 0 (option 2).
- option 3: To support the SDM in the DU NA resource. DU, according to the pattern of the TDD for the access UE (UE 200), in the direction same as the MT, is capable of the Tx and the Rx. The operation of the DU as explained below.

FIG. 8 shows an operation of the DU in proposal 0 (option 3) .

### (3.2.3) Proposal 1

Next, assumption 1 will be analyzed. FIG. 9 shows an operation of the DU and the MT of the IAB node in the H-D/H-U resource in a case in which the TDM is used.

In the SDM/FDM, simultaneous Tx/Rx in the DU and the MT is supported. An operation of the DU of the IAB node in a Hard resource of the DU is same as the TDM. Whereas, an operation of the MT of the IAB node differs from the TDM, and is required to be defined.

Specifically, an MT operation of the IAB node in a hard-DL and a hard-UL resource of the DU differs for the TDM and the SDM/FDM.

More specifically, it is necessary that the parent node identifies whether or not, the lower IAB node can support the SDM/FDM between the parent link (Link_parent) and a child node access link (Link_child, DL/UL Access).

Moreover, it is necessary that the parent node configures whether or not the lower IAB node can perform the SDM/FDM. Furthermore, it is necessary to define the MT operation of the IAB node in the hard-DL and the hard-UL resource of the DU.

In proposal 1, for indicating whether or not the IAB node supports the SDM/FDM, UE capability (or capability of the IAB node) is defined.

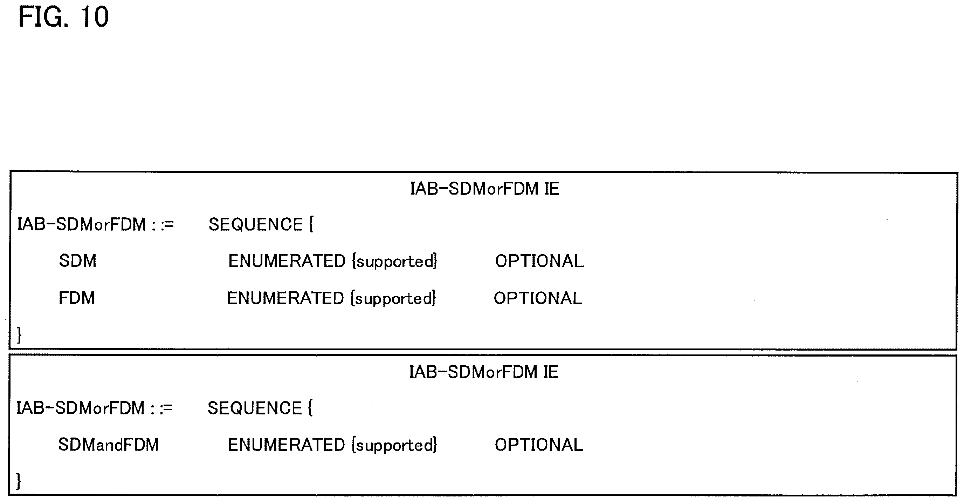

The support of the SDM and the FDM can be instructed together or separately. For instance, an information element of the UE capability information can be stipulated by an example as shown in FIG. 10.

FIG. 10 shows a configuration example of the UE capability information in proposal 1. As shown in FIG. 10, for example, IE IAB-SDMorFDM is used for indicating whether or not the IAB node supports the SDM/FDM between the parent link and the child node / access link.

The parent node is capable of requesting a report of the UE capability from the child node. Note that, as mentioned above, for the report, signaling of the RRC may be used or signaling of another layer (such as the MC and the like) may be used (the same applies hereinafter).

### (3.2.4) Proposal 2

In the case of assumption 1, the parent node is capable of configuration whether or not it is possible to perform the SDM/FDM in the DU H-D/H-U resource of the IAB node, by signaling of the RRC. Moreover, it is possible to configure the SDM and the FDM separately or together.

It is possible to configure separately or together, whether or not the SDM/FDM, in addition to the DU H-D/H-U resource, can be supported or performed in each DU resource (for example DU H-F/S-D/S-U/S-F), according to assumptions 1 to 4.

Moreover, signaling of the RRC, without indicating the resource type, may be signaling that simply configures whether or not the SDM and/or the FDM are supported or performed.

In this case, for supporting the SDM/FDM, it is necessary to define a child node (including UE) operation of default. For instance, in a case in which it is configured that the SDM/FDM are supported, it may be construed that the SDM/FDM is supported in all types of resources, in default.

Alternatively, it may be construed that the SDM/FDM is supported in the DU H-D/H-U resource, in default.

Alternatively, it may be construed that the SDM/FDM is supported in all types of resources excluding the DU NA resource, in default.

Alternatively, it may be construed as a resource in which the SDM/FDM is supported on the basis of an arbitrary combination of assumptions 1 to 4 mentioned above, in default.

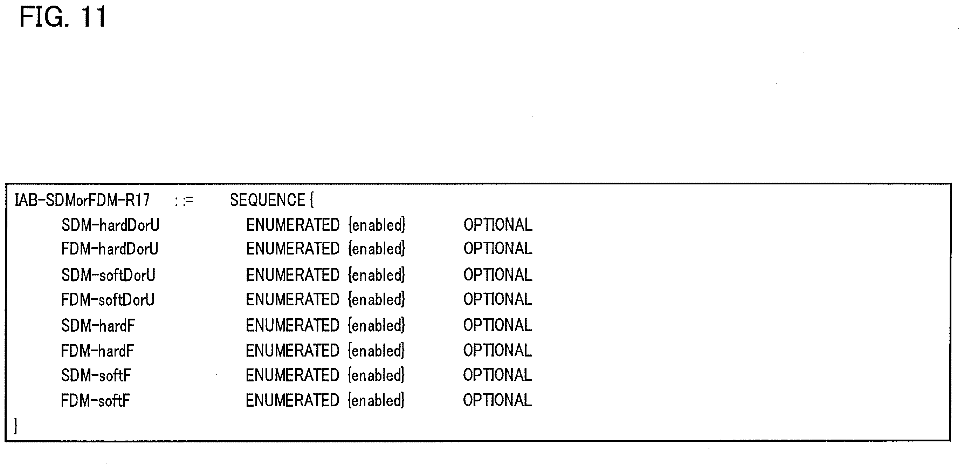

FIGs. 11 to 13 show presentation examples (parts 1 to 3) of whether or not there is a support for each resource type in proposal 2.

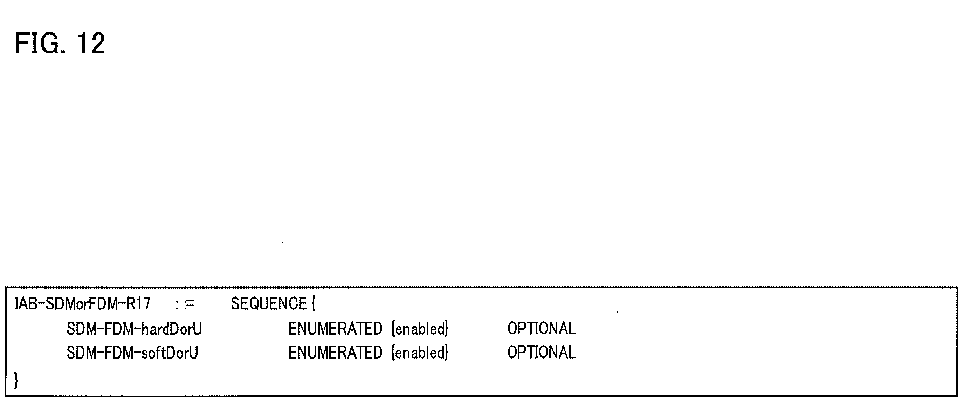

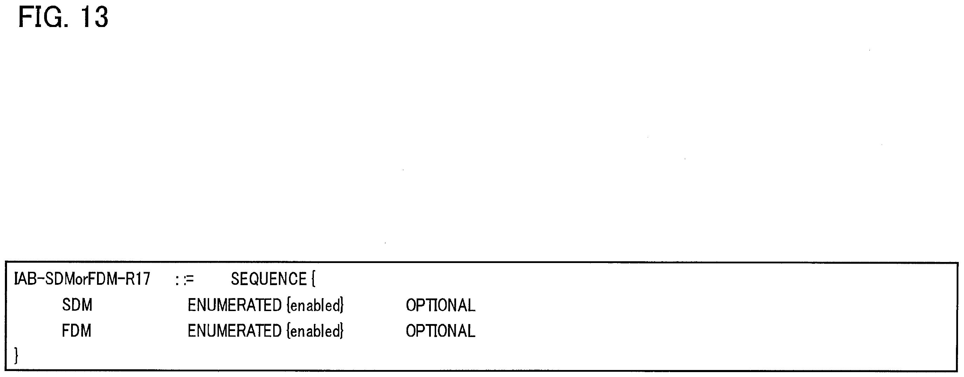

Specifically, FIG. 11 shows an example of an entirely distinct configuration signaling for each resource type. FIG. 12 shows an example of configuration signaling for some resource types in which the SDM and the FDM are integrated. FIG. 13 shows only another SDM or FDM, and shows an example of configuration signaling not indicating the resource type.

As shown in FIGs. 11 to 13, it is possible to indicate by ENUMERATED (enabled), whether or not the IAB node is compatible with an operation in a combination of the SDM/FDM and the resource.

### (3.2.5) Proposal 3

In a case of the SDM/FDM, there are following two options for the operation of the MT with respect to the hard-D/hard-U resource of the DU.
- option 1: in a case in which, the configuration or the instruction in the Tx/Rx direction of the MT differs from the configuration of the DU, the MT cannot make Tx/Rx.

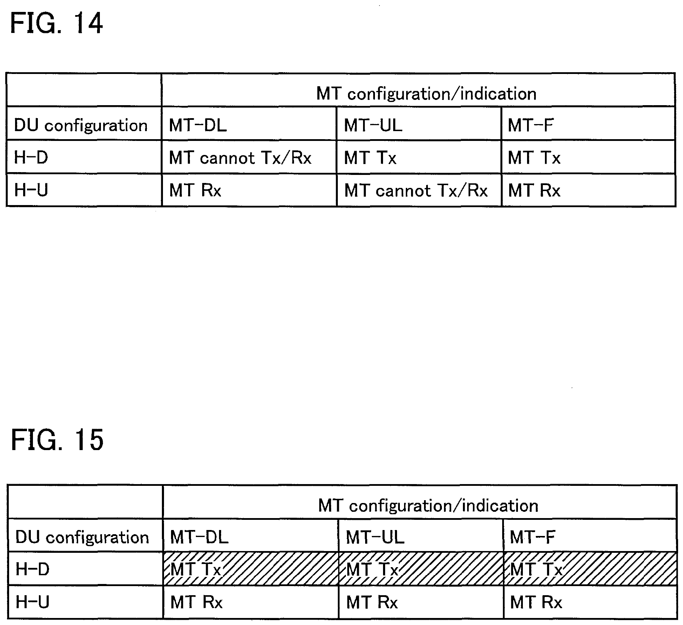

FIG. 14 is a diagram showing of operation of the MT in proposal 3 (option 1). Specifically, the operation of the MT shown in FIG. 14 is a reuse of table (clause) 7.3.3-2 of 3GPP TR38.874
- option 2: in a case in which, the configuration or the instruction in the Tx/Rx direction of the MT differs from the configuration of the DU, the MT is according to the configuration (instruction) in a DU link direction (for improving resource utilization rate of the SDM/FDM)

FIG. 15 shows an operation of the MT in proposal 3 (option 2) .

### (3.2.6) Proposal 4

First, assumption 2 will be analyzed. As mentioned above, assumption 2 is to support the SDM/FDM in the soft-DL and the soft-UL of the DU.

In the TDM, the parent node dynamically configures whether the DU Soft node of the IAB node is available or not available (IA/INA). Specifically, in a case in which IA is indicated, the DU can regard the Soft resource as available. In a case in which, INA is indicated, the DU cannot regard the Soft resource as available.

Moreover, both the implicit and explicit instructions of availability of the Soft resource of the IAB node are supported. Such explicit instruction of availability is based on an instruction by DCI (Downlink Control Information).

Whereas, in the SDM/FDM, it is possible to reuse the same signal as the TDM, and to indicate explicitly whether or not the DU Soft resource is available. However an operation of the IAB node may differ from that in a case of the TDM.

In such manner, the operation of the IAB node in the soft-DL/soft-UL resource of the DU differs for the TDM and the SDM/FDM.

Specifically, it is necessary that the parent node identifies whether or not the IAB node is capable of supporting the SDM/FDM, between the parent link and the child node / access link. A solution to such problem is similar to proposal 1.

Moreover, it is necessary to configure whether or not the parent node is capable of performing the SDM/FDM in the child node. A solution to such problem is similar to proposal 2.

Furthermore, it is necessary to define the operation of the IAB node. Specifically, in a case in which, the DU soft-DL/soft-UL resource is indicated as IA, the operation of the IAB node is similar to hard-DL/hard-UL, that is, assumption 1 and proposal 3.

Whereas, in a case in which, the DU soft-DL/soft-UL is indicated as INA, the operation of the IAB is similar to NA, that is, assumption 0 and proposal 0.

Next, assumption 3 will be analyzed. As mentioned above, assumption 3 is to support the SDM/FDM in the DU hard-F.

In assumption 3, the link direction of the SDM in the DU hard-F resource is determined by the DU. If the parent node identifies the link direction of the DU, it is possible to support the SDM. The operation of the IAB node differs from that in the case of the TDM.

In assumption 3, in such manner, the operation of the IAB node in the DU hard-F resource differs for the TDM and the SDM/FDM.

It is necessary that the parent node identifies whether or not the IAB node is capable of supporting the SDM/FDM between the parent link and the child node / access link. A solution to such problem is similar to proposal 1.

Moreover, it is necessary to configure whether or not the parent node is capable of performing the SDM/FDM in the child node. A solution to such problem is similar to proposal 2.

Furthermore, it is necessary to define the operation of the IAB node. Specifically, for indicating the link direction in the DU hard-F resource of the IAB node to the parent node, new UL signaling is necessary.

In proposal 4, for the report of the link direction in the DU hard-F resource, the following two options are there regarding contents included in the UL signaling.
- option 1: report a DU resource type including DU-DL and DU-UL
- option 2: report a DU resource type including DU-DL, DU-UL, and DU-F

It is possible to transmit the report of the link direction related to the DU hard-F resource via UCI (Uplink Control Information), MAC CE or PUSCH (Physical Uplink Shared Channel) .

### (3.2.7) Proposal 5

In a case of the SDM/FDM in the DU hard F resource, the MT is operated as follows. Specifically, in a case in which, the DU link direction is DL or UL, the MT, is similar to hard DL/hard UL, that is assumption 1 and proposal 3. Whereas, in a case in which the DU link direction is F, the MT cannot make Tx/Rx.

Here, assumption 4 will be analyzed. As mentioned above, assumption 4 is to support the SDM/FDM in the DU soft-F.

In assumption 4, whether or not DU soft-F resource is available (availability) is indicated by the parent node. In a case in which, it is indicated that the DU soft-F resource link is available, the direction of the SDM in the DU soft-F resource is determined by the DU. If the parent node identifies the link direction of the DU, it is possible to support the SDM/FDM.

It is possible to reuse the signaling for TDM for indicating explicitly whether or not the DU soft resource is available. However, the operation of the IAB node differs from that in the case of TDM.

In such manner, the operation of the IAB in the DU soft resource differs from the TDM and the SDM/FDM. Specifically, it is necessary that the parent node identifies whether or not the IAB node is capable of supporting the SDM/FDM between the parent link and the child node / access link. A solution to such problem is similar to proposal 1.

Moreover, it is necessary that the parent node configures whether or not it is possible to perform the SDM/FDM in the child node. A solution to such problem is similar to proposal 2.

Furthermore, it is necessary to define the operation of the IAB node. Specifically, in a case in which, the DU soft-F resource is indicated as IA, the operation of the IAB node is same as hard-F, that is, assumption 3.

Whereas, in a case in which, the DU soft-F resource is indicated as INA, the operation of the IAB node is similar to NA, that is, assumption 0 and proposal 0.

Moreover, regarding the new UL signaling, it is necessary to be similar to proposal 4. Specifically, the UL signaling is necessary for indicating to the parent node, the link direction of the DU of the IAB node in the DU soft resource indicated as the IA resource. Content of the signaling is similar to the DU hard-F resource that is, to assumption 3 and proposal 4.

Note that, the link direction of the DU hard-F resource and the DU soft-F resource may be reported together or may be reported separately.

### (4) Advantageous Effects

According to the embodiment explained above, the following advantageous effects are achieved. Specifically, according to the IAB node (radio communication node 100B) according to the present embodiment, it is possible to notify to the parent node (upper node) or the CU50 (network), whether or not the DU and the MT of the IAB is compatible with the SDM or the FDM.

Therefore, the parent node or the CU50, on the basis of the compatibility of the IAB node with the SDM/FDM, is capable of realizing configuration (allocation) of an appropriate radio resource in which the SDM/FDM has been taken into consideration. Accordingly, it is possible to deal with the simultaneous operation of the MT and the DU in which the SDM/FDM is used, while adhering to the predetermined IAB function in 3GPP.

In the present embodiment, the IAB node is capable of acquiring availability of the SDM or the FDM in a radio resource for the child node (lower node). Therefore, the IAB node is capable of selecting an appropriate radio resource and multiplexing system in the local node, on the basis of the compatibility of the child node with the SDM/FDM.

Moreover, in the present embodiment, the IAB node is capable of notifying as to by which of the transmission (Tx) or the reception (Rx) in the IAB node, the radio resource for the lower node is used. Therefore, the parent node or the CU50 is capable of realizing the configuration (allocation) of an appropriate radio resource on the basis of the utilization status of the radio resource for the lower node in the IAB node.

### (5) Other Embodiments

Although the contents of the present invention have been described by way of the embodiments, it is obvious to those skilled in the art that the present invention is not limited to what is written here and that various modifications and improvements thereof are possible.

For example, in the embodiments explained above, the names of parent node, IAB node, and child node are used; however, as long as the configuration of the radio communication node in which the radio backhaul between the radio communication nodes such as gNB and radio access with a user terminal is integrated is adopted, the names can be different. For example, the nodes can simply be called a first node, a second node, and the like, or can be called an upper node, a lower node, a relay node, an intermediate node, and the like.

Moreover, the radio communication node can be simply called as a communication device or a communication node, or can be expressed as a radio base station.

Furthermore, each operation of the abovementioned proposal 1 to proposal 5 may be associated multiply in the IAB node, that is, operations related to a plurality of proposals may be associated with a specific channel, user terminal, radio bearer and the like.

Moreover, the block diagram used for explaining the embodiments (FIGS. 3 and 4) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

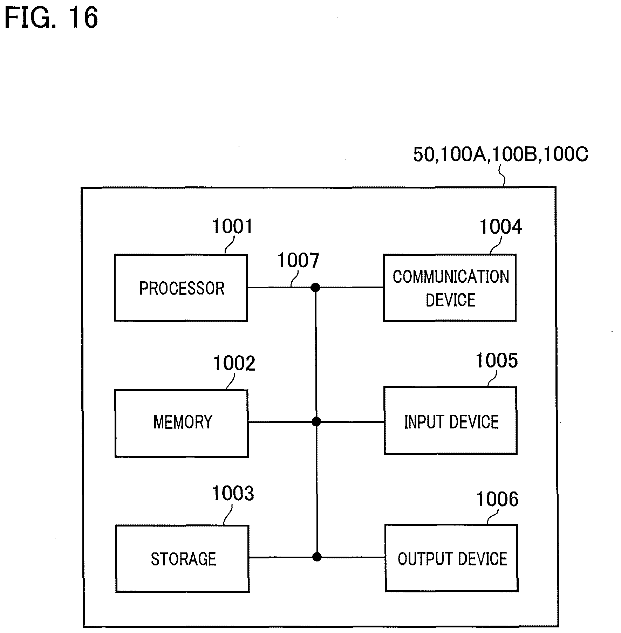

Furthermore, the CU 50 and the radio communication nodes 100A to 100C (reference device) explained above can function as a computer that performs the processing of the radio communication method of the present disclosure. FIG. 16 is a diagram showing an example of a hardware configuration of the reference device. As shown in FIG. 16, the reference device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the reference device (see FIGS. 3 and 4) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission / reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware . For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, MediumAccess Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer) . It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling) . Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like) . In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may be composed of one or more frames in the time domain. Each frame or frames in the time domain may be referred to as a subframe.

A subframe may be further configured by one or more slots in the time domain. The subframe may have a fixed time length (e.g., 1 ms) that does not depend on the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in a time unit larger than a minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one between a subframe and TTI may be a subframe (1 ms) in existing LTE, or may be shorter than 1 ms (for example, 1 to 13 symbols), or a period longer than 1 ms. Note that, a unit representing TTI may be called a slot, a minislot, or the like instead of a subframe.

Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. Further, the number of slots (the number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, a common RB may be specified by RB index based on the common reference point of the carrier. PRB may be defined in BWP and numbered within that BWP.

BWP may include UL BWP (UL BWP) and DL BWP (DL BWP) . One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP" .

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgement" and "decision" may include considering some operation as "judged" and "decided". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### EXPLANATION OF REFERENCE NUMERALS

- 10: Radio communication system
- 50: CU
- 100A, 100B, 100C: Radio communication node
- 110: Radio transmitting unit
- 120: Radio receiving unit
- 130: NW IF unit
- 140: IAB node connecting unit
- 150: Control unit
- 161: Radio transmitting unit
- 162: Radio receiving unit
- 170: Upper node connecting unit
- 180: Lower node connecting unit
- 190: Control unit
- UE: 200
- 1001: Processor
- 1002: Memory
- 1003: Storage
- 1004: Communication device
- 1005: Input device
- 1006: Output device
- 1007: Bus

## Claims

1. A radio communication node comprising:
an upper node connecting unit that is used for connecting with an upper node;
a lower node connecting unit that is used for connecting with a lower node; and
a control unit that notifies the upper node or a network whether or not the upper node connecting unit and the lower node connecting unit are compatible with at least one of a space division multiplexing and a frequency division multiplexing.

2. The radio communication node as claimed in claim 1, wherein the control unit acquires information about whether or not it is the space division multiplexing or the frequency division multiplexing in a radio resource for the lower node.

3. The radio communication node as claimed in claim 1 or 2, wherein the control unit notifies as to by which of transmission or reception in the radio communication node, a radio resource for the lower node is used.

4. A radio communication method comprising:
connecting to an upper node by using an upper node connecting unit;
connecting to a lower node by using a lower node connecting unit;
notifying the upper node or a network whether or not the upper node connecting unit and the lower node connecting unit are compatible with at least one of a space division multiplexing and a frequency division multiplexing.
